# EUROPÄISCHE PATENTSCHRIFT

(11) **EP 4 653 747 B1**
(45) Veröffentlichungstag und Bekanntmachung des Hinweises auf die Patenterteilung: **16.09.2026**
(21) Anmeldenummer: 24177924.8
(22) Anmeldetag: 24.05.2024
(51) Int. Cl.: F16M 11/10, F16M 11/20, F16M 13/02

(54) **FEDERARM MIT OPTIMIERTER KRAFTLINIE**
SPRING ARM WITH OPTIMIZED FORCE LINE
BRAS DE RESSORT À LIGNE DE FORCE OPTIMISÉE

(43) Veröffentlichungstag der Anmeldung: 26.11.2025
(73) Patentinhaber: MAVIG GmbH, 81829 München (DE)
(72) Erfinder: THOMANN, Hendrik, 91056 Erlangen (DE); HOFFSTETTER, Marc, 80634 München (DE)
(74) Vertreter: Vossius & Partner Patentanwälte Rechtsanwälte mbB

(56) Entgegenhaltungen:
- US-A1- 2011 315 843
- US-B1- 6 328 458
- US-B2- 10 845 000

## Beschreibung

Die Offenbarung betrifft ein Tragarmsystem und ein Verfahren zum Herstellen des Tragarmsystems.

Zum Tragen von, beispielsweise, medizinischen Apparaten werden in Krankenhäusern, Arztpraxen und ähnlichen Einrichtungen Tragarmsysteme verwendet, die über einen Befestigungsanker an der Decke oder Wand des jeweiligen Behandlungsraums bzw. Operationssaals aufgehängt sind. Dadurch ist gewährleistet, dass der Boden des Behandlungsraumes bzw. Operationssaals stets frei zugänglich und insbesondere einfach zu reinigen und zu desinfizieren ist, so dass die gestellten Hygieneanforderungen erfüllt werden können.

Das Dokument DE 10 2017 127 906 B4 offenbart einen Tragarm zur vertikal beweglichen Aufhängung von Anbaugeräten an einem ortsfesten oder ortsveränderlichen Befestigungspunkt einer Decke oder Wand mit einer an einem freien Ende des Tragarmes befindlichen Befestigungsbaugruppe zur Anbindung an den Befestigungspunkt und einer am gegenüberliegenden freien Ende des Tragarmes angeordneten Koppelbaugruppe für die Anbindung des Anbaugerätes. Der Tragarm ist in der Befestigungsbaugruppe und der Koppelbaugruppe mittels mindestens einer Drehachse gelagert und durch eine Gasdruckfeder, welche an der Befestigungsbaugruppe mit einem freien Ende drehbar festgelegt ist, in seiner Vertikalbewegung abgestützt. Auf mindestens einer der Drehachsen ist eine in ihrer Wirkung einstellbare Bremsvorrichtung zur Vorwahl der für die Vertikalbewegung des Tragarmes notwendigen Handhabungskräfte angeordnet. Die Bremsvorrichtung ist als Umschlingungsbremse ausgestaltet, die einen die Drehachse umgreifenden u-förmig ausgebildeten Bremskörper mit zwei durch einen Einstellspalt beabstandet zueinander angeordneten Bremsschenkeln aufweist. Der Einstellspalt ist durch eine Stellvorrichtung in seiner Breite variierbar.

Das Dokument US 6 328 458 B1 offenbart eine Armanordnung zum Halten eines chirurgischen Lichtkopfes einer chirurgischen Lichtvorrichtung. Die Armanordnung umfasst einen ersten Arm und einen zweiten Arm, der mit dem ersten Arm um eine Hauptdrehachse schwenkbar verbunden ist. Eine Stange erstreckt sich innerhalb eines inneren Bereichs des zweiten Arms. Ein Verbindungsglied ist mit der Stange an den ersten Arm gekoppelt, um eine Schwenkbewegung um eine Verbindungsdrehachse zu ermöglichen, die von der Hauptdrehachse beabstandet ist. Eine Feder erstreckt sich innerhalb des inneren Bereichs des zweiten Arms. Die Feder übt eine Kraft auf die Stange und das Gelenk aus, um den chirurgischen Lichtkopf auszugleichen. Ein Raumfüller umfasst eine äußere Abdeckung, die mit dem ersten Arm verbunden und so geformt ist, dass sie einen ersten Schlitz aufweist, sowie eine innere Abdeckung, die in die äußere Abdeckung eingesetzt und so geformt ist, dass sie einen zweiten Schlitz aufweist.

Prinzip eines jeden Tragarmsystems ist es, dass durch die angehängte Last und deren Hebelarm induzierte Drehmoment durch eine geeignete Mechanik mit einem elastischen Element auszugleichen (Equilibrium). Während die angehängte Last (Bewegungskräfte vernachlässigt) stets gleich bleibt, ändert sich jedoch der Hebelarm abhängig von der Hubposition: der Ausleger rotiert um eine Achse, der horizontale Abstand (ergo Hebelarm) variiert dabei. Über einen vertikalen Schwenkbereich ergibt sich ein nichtlinearer Momentenverlauf. Diese Nichtlinearität ist nachteilhaft.

Die zuvor genannten Nachteile werden zumindest teilweise durch Merkmale der unabhängigen Ansprüche vermieden. Abhängige Ansprüche weisen bevorzugte Ausführungsformen der Erfindung auf.

Im Einzelnen umfasst die vorliegende Offenbarung ein Tragarmsystem, das eingerichtet ist ein Objekt zu halten, das Tagarmsystem umfasst: einen Befestigungsanker, einen Ausleger, der mit dem Befestigungsanker verbunden ist; ein elastisches Element, das mit dem Ausleger verbunden ist; und eine Befestigungsbaugruppe, die ein erstes Bestandteil und ein zweites Bestandteil umfasst, wobei das erste Bestandteil der Befestigungsbaugruppe mit dem Befestigungsanker fest verbunden ist, wobei das zweite Bestandteil der Befestigungsbaugruppe mit einem Ende des elastischen Elements fest verbunden ist; wobei das erste Bestandteil und das zweite Bestandteil in einer Bewegungsrichtung zueinander beweglich verbunden sind, und wobei die Bewegungsrichtung anders ist als eine Richtung vom Ende des elastischen Elements zu einem Punkt, wo das elastische Element mit dem Ausleger verbunden ist.

Der Befestigungsanker stellt einen Fixpunkt dar, an dem das Tragarmsystem (auch Federarm oder Trägersystem genannt) an eine Decke, Wand oder anderes Objekt fixiert werden kann. Die Fixierung kann durch Verschrauben, Kleben, oder eine andere Verankerung implementiert werden.

Der Ausleger kann ein Tragrohr oder ein anderes starres Objekt sein. Der Ausleger kann auch durch zwei oder mehrere starre Objekt implementiert werden, wobei die zwei oder mehr starren Objekte bevorzugt parallel zueinander angeordnet sind und keine weiteren Freiheitsgrade ermöglichen (im Vergleich zu dem einzelnen starren Objekt). Der Ausleger kann andere Teile des Tragarmsystems (wie beispielsweise das elastische Element) umgeben, beispielsweise wenn der Ausleger hohl ist wie beispielsweise als Rohr.

Das elastische Element wirkt der Gewichtskraft des Objekts und des Tragarmsystems entgegen, durch seine Elastizität - beispielsweise folgend dem Hookeschen Gesetz. Das elastische Element legt seine Kraft an den Ausleger an. Dies geschieht durch eine Befestigung des elastischen Elements an einer seiner Seiten an dem Ausleger, und an der anderen Seite des elastischen Elements an der Befestigungsbaugruppe.

Die Befestigungsbaugruppe koppelt das elastische Element mit dem Befestigungsanker in einer beweglichen Art. Diese Beweglichkeit ist in eine solche Bewegungsrichtung (anders ist als eine Richtung vom Ende des elastischen Elements zu einem Punkt, wo das elastische Element mit dem Ausleger verbunden ist (also anders als eine Richtung in die die Kraft des elastischen Elements wirkt (Kraft-wirkende-Richtung))), dass der Winkel des elastischen Elements verändert wird, wenn sich das erste und zweite Bestandteil zueinander bewegen. Dabei ist diese Änderung des Winkels des elastischen Elements zusätzlich zu einer Winkeländerung durch ein Verkippen des Auslegers und des Tragarmsystems. Durch diese zusätzliche Änderung des Winkels wird der Nichtlinearität des Momentenverlaufes entgegengewirkt.

Die Bewegung der Befestigungsbaugruppe kann eine lineare Bewegung und/oder eine Drehbewegung sein. Eine Bewegung im Kreisbogen (um einen Drehpunkt) ist auch möglich. Die Bewegung kann eine relative Bewegung des elastischen Elements zum Befestigungsanker erwirken. Es kann auch oder alternativ einen Winkel zwischen Ausleger und elastischen Element verändern.

Fest verbunden (wobei das erste Bestandteil der Befestigungsbaugruppe mit dem Befestigungsanker fest verbunden ist, wobei das zweite Bestandteil der Befestigungsbaugruppe mit einem Ende des elastischen Elements fest verbunden ist) heißt, dass keine Drehung und/oder Bewegung zueinander möglich ist - also unbeweglich. Eine solche Verbindung kann beispielsweise durch Schrauben, Nieten, Kleben, oder Ähnlichem implementiert werden.

Das zu haltende Objekt kann ein Anbaugerät sein, wie beispielsweise ein Monitor, Operationswerkzeuge, Werkzeuge, ein Tablett zum Halten von Werkzeugen, eine Lampe, oder dergleichen. Das Objekt kann an einer dem Befestigungsanker abgewandten Seite des Auslegers an dem Ausleger befestigt sein.

Ferner kann die Befestigungsbaugruppe ein Langloch umfassen.

Das Langloch kann im ersten Bestandteil oder im zweiten Bestandteil sein. Durch eine Bewegung eines Schwenkbolzens im Langloch (beispielsweise um einen Drehpunkt) kann die Beweglichkeit in Bewegungsrichtung erreicht werden. Durch die Dimensionen des Langlochs (länge des Langlochs) kann die Beweglichkeit limitiert werden. Ein längeres Langloch erlaubt eine weitere Beweglichkeit, während ein kürzeres Langloch ein Ausmaß der Beweglichkeit limitiert. Die Länge (Ausmaß) des Langloch erstreckt sich bevorzugt anders als eine Richtung vom Ende des elastischen Elements zu einem Punkt, wo das elastische Element mit dem Ausleger verbunden ist.

Ferner kann das zweite Bestandteil das Langloch umfassen, wobei das Tragarmsystem ferner einen Lenker mit einem Schwenkbolzen umfasst, wobei der Lenker eingerichtet ist mit dem Schwenkbolzen das erste Bestandteil um eine Drehachse des Lenkers entlang dem Langloch beweglich zu dem zweiten Bestandteil zu führen.

Der Lenker kann gesondert von den ersten und zweiten Bestandteilen sein. Der Lenker kann ferner an einem Drehpunkt (bzw. Drehachse) drehbar fixiert sein, beispielsweise mit einem weiteren Bolzen. Alternativ kann der weitere Bolzen in ein weiteres Langloch greifen. Das weitere Langloch kann vom ersten Bestandteil umfasst sein. Die Befestigungsbaugruppe (welche auch den Lenker umfassen kann) kann so eingerichtet sein, dass Bewegung entlang beider Langlöcher gleichzeitig möglich ist. Alternativ kann die Befestigungsbaugruppe so eingerichtet sein, dass immer nur eine Bewegung in einem der zwei Langlöcher möglich ist. Zwei Langlöcher können eine erweiterte Beweglichkeit ermöglichen.

Ferner kann das elastische Element eingerichtet sein, auf den Lenker zu wirken.

Das Tragarmsystem kann so eingerichtet sein, dass eine drückende Kraft des elastischen Elements (da das elastische Element gestaucht ist) so auf dem Lenker wirkt, dass sich dieser bewegt. Diese Bewegung ist bevorzugt entlang des Langlochs (/der Langlöcher), um den zuvor beschriebenen Ausgleich der Nichtlinearität zu erreichen.

Ferner kann sich das Langloch mit einem Winkel von mindestens 45° relativ zu einer Kraft-wirkenden-Richtung des elastischen Elements ausdehnen.

Bevorzugt ist der Winkel 60°, weiter bevorzugt 90°. Auch kleinere Winkel (zwischen 0° und 45°) sind möglich. Ein größerer Winkel erhöht die (zusätzliche) Änderung des Winkels des elastischen Elements. Somit kann ein stärkerer Ausgleich der Nichtlinearität erreicht werden.

Ferner kann die Befestigungsbaugruppe nur durch den Ausleger und/oder das elastische Element mit dem Punkt verbunden sein, an dem das elastische Element mit dem Ausleger verbunden ist.

Die Variante, dass die Befestigungsbaugruppe nur durch das elastische Element mit dem genannten Punkt verbunden ist, ist bevorzugt.

Die exklusive Verbindung ("nur ... verbunden sein") kann direkt Verbindung meinen (also nur ein Teil als Verbindungsstück; direkt exklusiv). Eine indirekte Verbindung über mehr als ein Teil kann (zusätzlich) über den Befestigungsanker geschehen: also wäre die Befestigungsbaugruppe mit dem Befestigungsanker (erstes Zwischenelement) verbunden, welcher wiederrum mit dem Ausleger (zweites Zwischenelement) verbunden ist. Somit bestünde auch eine indirekte Verbindung über die zwei Teile Befestigungsanker und Ausleger. Eine direkte Verbindung der Befestigungsbaugruppe mit dem Ausleger besteht in diesem Fall nicht.

Auch kann die exklusive Verbindung direkt und indirekt exklusiv umfassen. Dies entspricht der Variante mit "und" ohne "oder": Ferner kann die Befestigungsbaugruppe nur durch den Ausleger und das elastische Element mit dem Punkt verbunden sein, an dem das elastische Element mit dem Ausleger verbunden ist. Weitere Verbindungen (direkt oder indirekt) sind somit ausgeschlossen.

Ferner kann die Befestigungsbaugruppe eine Kulissenscheibe umfassen.

Die Kulissenscheibe kann das Langloch umfassen. Ferner kann die Kulissenscheibe ein weiteres Loch, welches als Drehpunkt fungiert, umfassen. Durch dieses weitere Loch kann der weitere Bolzen verlaufen. Die Kulissenscheibe kann Teil des zweiten Bestandteils sein. Die Kulissenscheibe kann das zweite Bestandteil sein.

Ferner kann das elastische Element eine Feder sein.

Alternativ kann das elastische Element eine Gasdruckfeder, Schraubenfeder, oder Element mit Eigenschaften nach dem Hookeschen Gesetz, oder ein anderes Element, das elastische Eigenschaften aufweist, sein.

Ferner kann die Befestigungsbaugruppe eingerichtet sein, das elastische Element so zu verschieben, dass ein Winkel zwischen dem elastischen Element und dem Ausleger größer ist, wenn der Ausleger waagerecht ist.

Somit kann ein stärkerer Ausgleich der Nichtlinearität erreicht werden. Der Winkel kann kleiner sein, wenn der Ausleger nicht waagerecht ist (bevorzugt, wenn der Ausleger nach unten geneigt ist). Waagerecht kann relativ zu der Befestigung und dem Befestigungsanker sein. Im Falle einer (angedachten) Deckenbefestigung (also zeigt der Befestigungsanker vertikal nach oben), ist waagerecht rechtwinklig zu der Befestigung. Im Falle einer (angedachten) Wandbefestigung (also zeigt der Befestigungsanker horizontal/waagerecht zur Seite), ist waagerecht parallel/antiparallel zu der Befestigung.

Ferner kann die Befestigungsbaugruppe eingerichtet sein, das elastische Element so zu verschieben, dass eine Hookesche Kraft des elastischen Elements verändert wird.

Somit kann ein stärkerer Ausgleich der Nichtlinearität erreicht werden. Bevorzugt wird die Hookesche Kraft des elastischen Elements größer, wenn sich der Ausleger einer waagerechten Position annähert.

Ferner kann der Ausleger ein starres Objekt sein.

Ferner kann der Ausleger einteilig sein.

Das Tragarmsystem kann in einer Richtung rechtwinklig zur Neigungsrichtung des Auslegers rotierbar sein. Diese Rotation kann vom Ausleger relativ zum Befestigungsanker sein. Die Rotation kann rechtwinklig zur Befestigung des Befestigungsanker sein.

Ferner können Teile des Tragarmsystems nur (ausschließlich) durch Biegen und Verschrauben miteinander verbunden werden.

Dies vermeidet Schweißen. Dies kann billiger und schneller sein. Auch können manuelle Prozesse vermieden werden.

Zumindest manche (oder alle) Teile des Tragarmsystems können aus gebogenem Blech gefertigt sein (als ersten Schritt) und bevorzugt verschraubt sein (als zweiten Schritt).

Die beschriebenen Vorteile sind weder limitierend noch exklusiv für die entsprechenden Aspekte. Ein Aspekt kann weitere, nicht explizit genannte Vorteile haben.

Die hier offengelegten beispielhaften Ausführungsformen und Beispiele sind darauf ausgerichtet, Merkmale bereitzustellen, die durch Bezugnahme auf die folgende Beschreibung in Verbindung mit den beigefügten Figuren leicht ersichtlich werden. In Übereinstimmung mit verschiedenen Ausführungsformen werden hier beispielhafte Systeme, Verfahren und Geräte offengelegt. Es versteht sich jedoch, dass diese Ausführungsformen als Beispiele und nicht als Beschränkungen dargestellt werden, und es wird für diejenigen, die die vorliegende Offenbarung gelesen haben und über normale Fachkenntnisse verfügen, offensichtlich sein, dass verschiedene Änderungen an den offengelegten Ausführungsformen vorgenommen werden können, während sie im Rahmen der vorliegenden Offenbarung bleiben.

Daher ist die vorliegende Offenbarung nicht auf die hierin beschriebenen und dargestellten beispielhaften Ausführungsformen und Anwendungen beschränkt. Darüber hinaus sind die spezifische Reihenfolge und/oder Hierarchie der Schritte in den hier offengelegten Verfahren lediglich beispielhafte Ansätze. Auf der Grundlage von Konstruktionsvorlieben kann die spezifische Reihenfolge oder Hierarchie der Schritte der offengelegten Verfahren oder Prozessen neu geordnet werden, während sie im Rahmen der vorliegenden Offenbarung bleibt. Diejenigen, die sich mit der Materie auskennen, werden daher verstehen, dass die hier offengelegten Verfahren und Techniken verschiedene Schritte oder Handlungen in einer Beispielreihenfolge darstellen, und die vorliegende Offenbarung ist nicht auf die spezifische Reihenfolge oder Hierarchie beschränkt, sofern nicht ausdrücklich etwas anderes angegeben ist.

Es versteht sich auch, dass jede Bezugnahme auf ein Element hier mit einer Bezeichnung wie "erstes", "zweites" usw. nicht generell die Menge oder Reihenfolge dieser Elemente begrenzt. Vielmehr können diese Bezeichnungen hier als praktisches Mittel zur Unterscheidung zwischen zwei oder mehr Elementen oder Instanzen eines Elements verwendet werden. Der Hinweis auf ein erstes und ein zweites Element bedeutet also nicht, dass nur zwei Elemente verwendet werden können oder dass das erste Element dem zweiten Element auf irgendeine Weise vorausgehen muss.

Verschiedene Modifikationen der in dieser Offenbarung beschriebenen Implementierungen sind für den Fachmann ohne weiteres ersichtlich, und die hierin definierten allgemeinen Grundsätze können auf andere Implementierungen angewandt werden, ohne vom Umfang dieser Offenbarung abzuweichen. Daher ist die Offenbarung nicht auf die hier gezeigten Implementierungen beschränkt, sondern hat den größtmöglichen Anwendungsbereich, der mit den hier offengelegten neuen Merkmalen und Grundsätzen vereinbar ist, wie sie in den untenstehenden Ansprüchen aufgeführt sind.

Die obigen und andere Aspekte und ihre Implementierungen werden in den Zeichnungen, den Beschreibungen und den Ansprüchen ausführlicher beschrieben.
Fig. 1a bis 1c zeigen schematische Abbildungen eines Tragarmsystems nach einer Ausführungsform der Offenbarung in verschiedenen Neigungspositionen.
Fig. 2 zeigt eine schematische Abbildung des Tragarmsystems nach der Ausführungsform der Offenbarung.
Fig. 3 zeigt eine schematische Abbildung eines Ausschnitts des Tragarmsystems nach der Ausführungsform der Offenbarung.
Fig. 4a bis 4c zeigen schematische Abbildungen eines Tragarmsystems nach einer anderen Ausführungsform der Offenbarung in verschiedenen Neigungspositionen.
Fig. 5 zeigt eine schematische Abbildung des Tragarmsystems nach der anderen Ausführungsform der Offenbarung.
Fig. 6 zeigt eine schematische Abbildung eines Ausschnitts des Tragarmsystems nach der anderen Ausführungsform der Offenbarung.

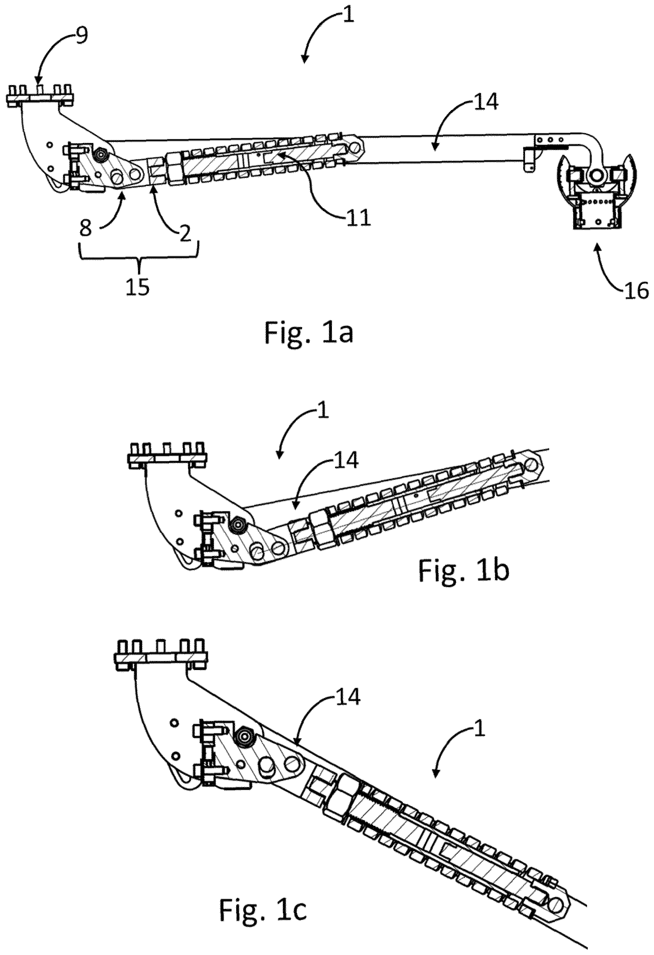

Fig. 1a bis 1c zeigen schematische Abbildungen eines Tragarmsystems nach einer Ausführungsform der Offenbarung in verschiedenen Neigungspositionen. Figuren 1a bis 1c, 2 und 3 zeigen die gleiche Ausführungsform.

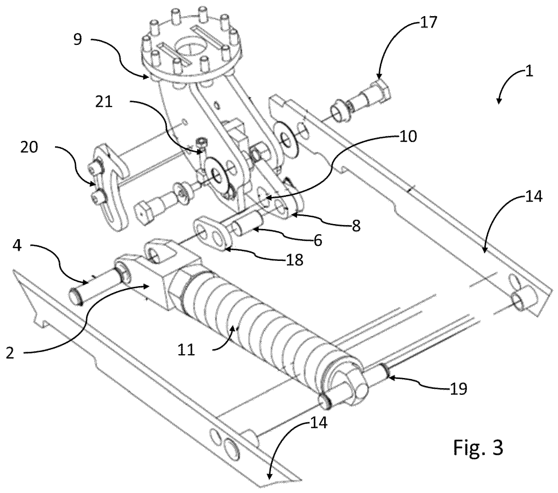

Fig. 1a zeigt ein Tragarmsystem 1 in einer waagerechten Position (Ausleger ist waagerecht). Das Tragarmsystem 1 umfasst einen Befestigungsanker 9, eine Befestigungsbaugruppe 15, einen Ausleger 14, ein elastisches Element 11, eine Halterung 16 zum Halten eines Objektes. Die Befestigungsbaugruppe 15 umfasst ein erstes Bestandteil 8 und ein zweites Bestandteil 2. Das erste Bestandteil 8 weist ein Langloch 10 auf, in welches ein Schwenkbolzen 4 des zweiten Bestandteils 2 beweglich eingreift (Langloch 10 und Schwenkbolzen 4 siehe Figur 3). In dieser Fig. 1a ist der Schwenkbolzen 4 in der unteren Position in dem Langloch 10.

Fig. 1b zeigt das Tragarmsystem 1 in einem nach oben geneigtem Zustand (positiver Winkel). Das Tragarmsystem 1 aus fig. 1b ist das gleiche Tragarmsystem 1 wie in fig. 1a, nur dass die Halterung 16 und der Teil des Auslegers 14 bei der Halterung 16 nicht gezeigt sind. Der Schwenkbolzen 4 ist in der unteren Position in dem Langloch 10 (siehe Figur 3). Dadurch ist der Winkel des elastischen Elements 11 (relativ zum Ausleger 14) größer. Somit wirkt eine größere vertikale Kraftkomponente.

Fig. 1c zeigt das Tragarmsystem 1 in einem nach unten geneigtem Zustand (negativer Winkel). Das Tragarmsystem 1 aus fig. 1c ist das gleiche Tragarmsystem 1 wie in fig. 1a, nur dass die Halterung 16 und der Teil des Auslegers 14 bei der Halterung 16 nicht gezeigt sind. Der Schwenkbolzen 4 ist in der oberen Position in dem Langloch 10. Dadurch ist der Winkel des elastischen Elements 11 (relativ zum Ausleger 14) kleiner. Somit wirkt eine kleinere vertikale Kraftkomponente.

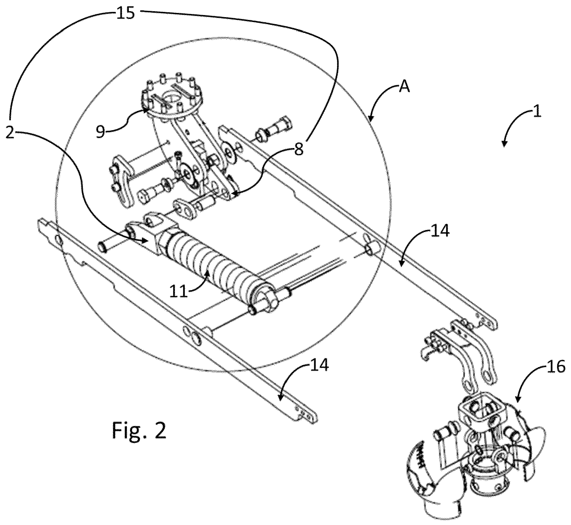

Fig. 2 zeigt eine schematische Abbildung des Tragarmsystems 1 nach der Ausführungsform der Offenbarung. Figur 2 ist eine Explosivdarstellung. Das Tragarmsystem 1 umfasst einen Befestigungsanker 9, einen Ausleger 14 in zwei Teilen, ein elastisches Element 11, einen Halter 16, und eine Befestigungsbaugruppe 15. Die Befestigungsbaugruppe 15 umfasst ein erstes Bestandteil 8 und ein zweites Bestandteil 2. Der Kreis A zeigt einen Ausschnitt, der in Figur 3 nochmal dargestellt ist.

Fig. 3 zeigt eine schematische Abbildung eines Ausschnitts des Tragarmsystems 1 nach der Ausführungsform der Offenbarung. Figur 3 ist eine Explosivdarstellung. Das Tragarmsystem 1 umfasst einen Befestigungsanker 9, ein Fixierungsmittel 17, ein oberes Anschlagsmittel 21, ein unteres Anschlagsmittel 20, einen Ausleger 14 in zwei Teilen, ein elastisches Element 11, ein Befestigungsmittel 19, erstes Bestandteil 8, ein zweites Bestandteil 2, einen Schwenkbolzen 4, ein Zwischenstück 18 (z.B. ein Lenker), einen weiteren Bolzen 6, und ein Langloch 10.

Der Befestigungsanker 9 kann an einer Decke oder Wand (oder Ähnliches) befestigt werden.

Der Befestigungsanker 9 bietet einen Fixpunkt für das erste Bestandteil 8. Das erste Bestandteil 8 kann durch Fixierungsmittel 17 (und der Schraube darunter) an dem Befestigungsanker 9 befestigt werden. Das Fixierungsmittel 17 kann eine Schraube mit Mutter und möglichen Unterlegscheiben sein. Auch alternative Fixierungsmittel 17 sind möglich, wie Kleben, Schweißen, Nieten. An dem Befestigungsanker 9 können das untere Anschlagmittel 20 und das obere Anschlagmittel 21 angebracht sein. Das untere Anschlagmittel 20 kann eine flexible Limitierung für eine Auslenkung des Auslegers 14 nach unten darstellen. Durch den Schlitz und die zwei Schrauben in dem unteren Anschlagmittel 20 kann das untere Anschlagmittel 20 verschoben werden und so die Auslenkung des Auslegers 14 nach unten verändert werden. Das obere Anschlagmittel 21 kann eine flexible Limitierung für eine Auslenkung des Auslegers 14 nach oben darstellen. Durch die Schraube im oberen Anschlagmittel 21 kann eine obere Limitierung der Auslenkung des Auslegers 14 verändert werden. Alternativ kann das untere Anschlagmittel 20 und/oder das obere Anschlagmittel 21 weggelassen werden. Alternativ kann das untere Anschlagmittel 20 und/oder das obere Anschlagmittel 21 starr sein. Das heißt, dass das/die entsprechende Anschlagmittel nicht bewegt werden können und so die Limitierung(en) der Auslenkung des Auslegers 14 fest ist. Ein solches Anschlagmittel kann beispielsweise fest an den Befestigungsanker 9 geschraubt/genietet/geschweißt sein.

Das erste Bestandteil 8 umfasst das Langloch 10 und ein weiteres Loch (benachbart, z.B. rechts neben dem Langloch 10). Der Schwenkbolzen 4 verläuft durch das Langloch 10 und ist darin beweglich. Der weitere Bolzen 6 verläuft durch das weitere Loch und bildet eine Drehachse. Der weitere Bolzen 6 ist ferner im Zwischenstück 18 gelagert. Auch der Schenkbolzen 4 verläuft durch das Zwischenstück 18. Das Zwischenstück 18 stellt sicher, dass der Kraftfluss allmählich passiert und ein sanfter Übergang von der Horizontalen sicher gewährleistet ist, wenn der Schwenkbolzen 4 sich in dem Langloch 10 bewegt. Der Schwenkbolzen 4 verläuft ferner durch das zweite Bestandteil 2. Durch ein Bewegen des Schwenkbolzens 4 in dem Langloch 10 kann ein Winkel zwischen dem elastischen Element 11 und dem Ausleger 14 verändert werden (zusätzlich zu einem Auslenken des Auslegers 14 relativ zum Befestigungsanker 9).

Bevorzugt wirkt das elastische Element 11 mit von dem elastischen Element 11 wegzeigenden Kräften (entspricht einem gestauchten Hookeschen Körper). In einem System des Standes der Technik würde demgegenüber die von dem elastischen Element 11 erzeugte Kraft steigen, wenn der Ausleger 14 nach unten geneigt wird.

Der Ausleger 14 erfährt während des Vertikalhubs immer die entsprechende Kraft für das Tragen des zu haltenden Objekts, die gerade benötigt wird. Diese Kraft des elastischen Elements 11 wird mittels Zwischenstück 18 - die einerseits im Drehpunkt (durch weiteren Bolzen 6) gelagert sind und andererseits über einen Schwenkbolzen 4 in dem Langloch 10 zwangsgeführt werden - verändert. Im Stand der Technik hat sich gezeigt, dass die Bereitstellung der Kraft eine wesentliche Hürde darstellt. Aufgrund der Tatsache, dass der Ausleger einen Kreisbogen beschreibt, sind Winkelfunktionen nicht vermeidbar. Gepaart mit linearen Bewegungen der Koppelbaugruppe sind Probleme zwangsläufig.

Fährt man beispielsweise aus der erhobenen Position des Tragarmsystems 1 (wie in Fig. 1b gezeigt), so ist das Verhältnis der Kräfte (Schraubenfeder/Anhängelast) relativ ausgewogen. Mit der horizontalen Position des Auslegers des Tragarms verändert sich das Kräfteverhältnis progressiv. Das Problem wird größer, je weiter man niedrige Werte für den Ausleger erreicht.

Ab ca. der horizontalen Position sinkt die Kraft des elastischen Elements 11 überproportional, was im Wesentlichen die Folge hat, dass das Verhältnis Kraftarm / Lastarm wieder ausgewogen ist.

Während der erhobenen Position (wie in Fig. 1b) ist die Kraftübertragung mittels elastischen Elements 11 und das zweite Bestandteil 2 auf den Ausleger 14 über den Drehpunkt (im weiteren Bolzen 6) gekennzeichnet. Der Schwenkbolzen 4 liegt im Langloch 10 unten an, solange sich der Ausleger 14 in der erhöhten Position befindet. Sobald allerdings die Notwendigkeit besteht, dass das zu haltende Objekt über die Horizontale hinausbewegt wird, bewegt sich der Schwenkbolzen 4 innerhalb des Langlochs 10 in die obere Position und reduziert damit die Kraft des elastischen Elements 11. Das Zwischenstück 18 stellt sicher, dass der Kraftfluss allmählich passiert und ein sanfter Übergang von der Horizontalen sicher gewährleistet ist. Das Zwischenstück 18 ist für die generelle Funktionsweise nicht essentiell und kann weggelassen werden.

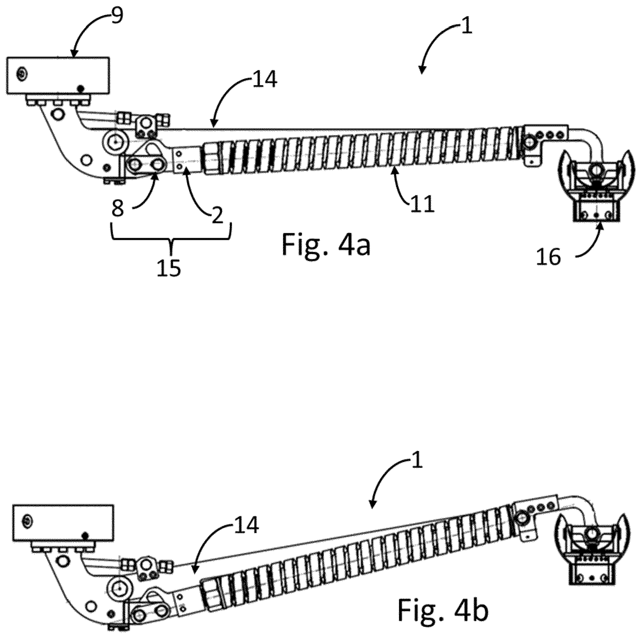

Fig. 4a bis 4c zeigen schematische Abbildungen eines Tragarmsystems 1 nach einer anderen Ausführungsform der Offenbarung in verschiedenen Neigungspositionen. Figuren 4a bis 4c, 5 und 6 zeigen die gleiche Ausführungsform.

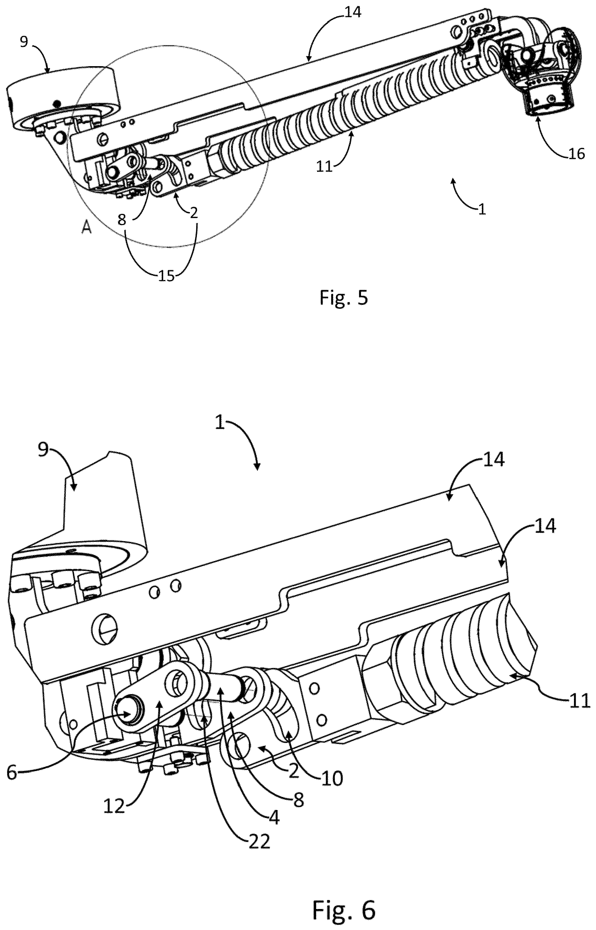

Fig. 4a zeigt ein Tragarmsystem 1 in einer waagerechten Position (Ausleger ist waagerecht). Das Tragarmsystem umfasst einen Befestigungsanker 9, eine Befestigungsbaugruppe 15, einen Ausleger 14, ein elastisches Element 11, eine Halterung 16 zum Halten eines Objektes. Die Befestigungsbaugruppe 15 umfasst ein erstes Bestandteil 8 und ein zweites Bestandteil 2. Das erste Bestandteil 8 weist ein Langloch 10 auf, in welches ein Schwenkbolzen 4 des zweiten Bestandteils 2 beweglich eingreift (Langloch 10 und Schwenkbolzen 4 siehe Figur 6). In dieser Fig. 4a ist der Schwenkbolzen 4 in der unteren Position in dem Langloch 10.

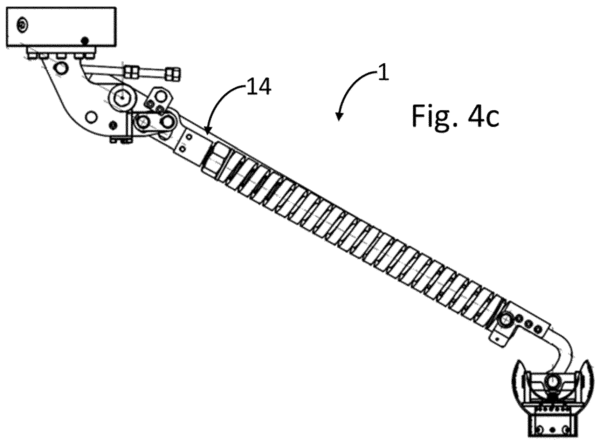

Fig. 4b zeigt das Tragarmsystem 1 in einem nach oben geneigtem Zustand (positiver Winkel). Das Tragarmsystem 1 aus fig. 4b ist das gleiche Tragarmsystem 1 wie in fig. 4a. Der Schwenkbolzen 4 ist in der unteren Position in dem Langloch 10 (siehe Figur 6). Dadurch ist der Winkel des elastischen Elements 11 (relativ zum Ausleger 14) größer und das elastische Element 11 ist weiter entfernt vom Ausleger 14 (im Vergleich zu Fig. 4c). Somit wirkt eine größere vertikale Kraftkomponente.

Fig. 4c zeigt das Tragarmsystem 1 in einem nach unten geneigtem Zustand (negativer Winkel). Das Tragarmsystem 1 aus fig. 4c ist das gleiche Tragarmsystem 1 wie in fig. 4a. Der Schwenkbolzen 4 ist in der oberen Position in dem Langloch 10. Dadurch ist der Winkel des elastischen Elements 11 (relativ zum Ausleger 14) kleiner und das elastische Element 11 ist näher am Ausleger 14. Somit wirkt eine kleinere vertikale Kraftkomponente.

Fig. 5 zeigen eine schematische Abbildung des Tragarmsystems 1 nach der anderen Ausführungsform der Offenbarung. Figur 5 ist eine Explosivdarstellung. Das Tragarmsystem 1 umfasst einen Befestigungsanker 9, einen Ausleger 14 in zwei Teilen, ein elastisches Element 11, einen Halter 16, und eine Befestigungsbaugruppe 15. Die Befestigungsbaugruppe 15 umfasst ein erstes Bestandteil 8 und ein zweites Bestandteil 2. Der Kreis A zeigt einen Ausschnitt, der in Figur 6 nochmal dargestellt ist.

Fig. 6 zeigen eine schematische Abbildung eines Ausschnitts des Tragarmsystems 1 nach der anderen Ausführungsform der Offenbarung. Figur 6 ist eine Explosivdarstellung. Das Tragarmsystem 1 umfasst einen Befestigungsanker 9 (nur teilweise gezeigt), einen Ausleger 14 in zwei Teilen, ein elastisches Element 11, ein Befestigungsmittel 19 (nicht gezeigt), einen Lenker 12, ein erstes Bestandteil 8, ein zweites Bestandteil 2, einen Schwenkbolzen 4, einen weiteren Bolzen 6, ein Langloch 10, und ein weiteres Langloch 22.

Der Befestigungsanker 9 kann an einer Decke oder Wand (oder Ähnliches) befestigt werden. Der Befestigungsanker 9 bietet einen Fixpunkt für das erste Bestandteil 8.

Das zweite Bestandteil 2 umfasst das Langloch 10 und ein weiteres Loch (benachbart, z.B. in dieser Figur links neben dem Langloch 10). Der Schwenkbolzen 4 verläuft durch das Langloch 10 und ist darin beweglich. Der weitere Bolzen 6 verläuft durch das weitere Loch und bildet eine Drehachse. Das erste Bestandteil 8 umfasst ein weiteres Langloch 22 und ein zweites Loch (benachbart, z.B. in dieser Figur rechts neben dem weiteren Langloch 10). Der weitere Bolzen 6 verläuft durch das weitere Langloch 22 und ist darin beweglich. Der Lenker 12 umfasst zwei Löcher. Durch ein Loch des Lenkers 12 verläuft der Schwenkbolzen 4, durch das andere Loch des Lenkers 12 verläuft der weitere Bolzen 6. Der weitere Bolzen 6 fungiert als Drehachse für Drehungen des Schwenkbolzens 4 in dem Langloch 10 und der Schwenkbolzen 4 fungiert als Drehachse für Drehungen des weiteren Bolzens 6 in dem weiteren Langloch 22. In einer Alternative kann der Lenker 12 weggelassen werden.

Durch die zwei Langlöcher (10 und 22) kann eine größere Veränderung des Winkels erreicht werden.

Bevorzugt wirkt das elastische Element 11 mit von dem elastischen Element 11 wegzeigenden Kräften (entspricht einem gestauchten Hookeschen Körper). In einem System des Standes der Technik würde demgegenüber die von dem elastischen Element 11 erzeugte Kraft steigen, wenn der Ausleger 14 nach unten geneigt wird.

Der Ausleger 14 erfährt während des Vertikalhubs immer die entsprechende Kraft für das Tragen des getragenen Objekts (Lastarm), die gerade benötigt wird und die mittels ersten Bestandteils 8 bereitgestellt wird (Kraftarm). Die Bereitstellung der Kraft stellt eine wesentliche Hürde dar. Aufgrund der Tatsache, dass der Ausleger 14 einen Kreisbogen beschreibt, sind Winkelfunktionen nicht vermeidbar.

Fährt man beispielsweise aus der erhobenen Position des Tragarmsystems 1 so ist das Verhältnis des Kraftarms bezüglich des Lastarms ausgewogen. Mit der horizontalen Position des Tragarms kehrt sich das Verhältnis um. Der Kraftarm nimmt an Kraft zu, der Lastarm nimmt jedoch ab. Das Problem steigt, je weiter man niedrige Werte für den Ausleger erreicht.

Ab der horizontalen Position sinkt der Kraftarm überproportional, was im Wesentlichen die Folge hat, dass das Verhältnis Kraftarm / Lastarm wieder ausgewogen ist.

Während der erhobenen Position (wie in Fig. 4b) bewegt sich der weitere Bolzen 6 im weiteren Langloch 22 nach oben, während der Schwenkbolzen 4 am unteren Anschlag des Langlochs 10 verbleibt. Bei Hinabbewegen des Auslegers 14 (wie in Fig. 4c) ist der weitere Bolzen 6 am unteren Anschlag des weiteren Langlochs 22, während sich der Schwenkbolzen 4 im Langloch 10 nach oben bewegt (relativ zum Langloch 10). Der Lenker 12 stellt sicher, dass der Kraftfluss nicht abreißt und ein sanfter Übergang von der Horizontalen sicher gewährleistet ist.

Die Fixierungsmittel 17, das untere Anschlagmittel 20 und das obere Anschlagmittel 21, die anhand der ersten Ausführungsform beschrieben wurden (Fig. 3) können entsprechend mit der weiteren Ausführungsform gemäß den Figuren 4a-6 kombiniert werden.

## Patentansprüche

1. Tragarmsystem (1), eingerichtet ein Objekt zu halten, das Tagarmsystem (1) umfassend:
einen Befestigungsanker (9),
einen Ausleger (14), der mit dem Befestigungsanker (9) verbunden ist;
ein elastisches Element (11), das mit dem Ausleger (14) verbunden ist; und
eine Befestigungsbaugruppe (15), die ein erstes Bestandteil (8) und ein zweites Bestandteil (2) umfasst, wobei das erste Bestandteil (8) der Befestigungsbaugruppe (15) mit dem Befestigungsanker (9) fest verbunden ist, wobei das zweite Bestandteil (2) der Befestigungsbaugruppe (15) mit einem Ende des elastischen Elements (11) fest verbunden ist;
wobei das erste Bestandteil (8) und das zweite Bestandteil (2) in einer Bewegungsrichtung zueinander beweglich verbunden sind, wobei die Bewegungsrichtung anders ist als eine Richtung vom Ende des elastischen Elements (11) zu einem Punkt, wo das elastische Element mit dem Ausleger (14) verbunden ist, und **dadurch gekennzeichnet, dass** die Befestigungsbaugruppe (15) eingerichtet ist, dass eine Bewegung des ersten Bestandteils (8) relativ zu dem zweiten Bestandteil (2) in Bewegungsrichtung einen Winkel zwischen Ausleger (14) und elastischem Element (11) verändert;
wobei die Befestigungsbaugruppe (15) ein Langloch (10) umfasst.

2. Tragarmsystem (1) nach Anspruch 1, wobei das zweite Bestandteil (2) das Langloch (10) umfasst, und wobei das Tragarmsystem (1) ferner einen Lenker (12) mit einem Schwenkbolzen (4) umfasst, wobei der Lenker (12) eingerichtet ist mit dem Schwenkbolzen (4) das erste Bestandteil um eine Drehachse des Lenkers (12) entlang dem Langloch (10) beweglich zu dem zweiten Bestandteil (2) zu führen.

3. Tragarmsystem (1) nach Anspruch 2, wobei das elastische (11) Element eingerichtet ist, auf den Lenker (12) zu wirken.

4. Tragarmsystem (1) nach einem der Ansprüche 1 bis 3, wobei sich das Langloch (10) mit einem Winkel von mindestens 45° relativ zu einer Kraft-wirkenden-Richtung des elastischen Elements (11) ausdehnt.

5. Tragarmsystem (1) nach einem der Ansprüche 1 bis 4, wobei die Befestigungsbaugruppe (15) nur durch den Ausleger (14) und/oder das elastische Element (11) mit dem Punkt verbunden ist, an dem das elastische Element (11) mit dem Ausleger (14) verbunden ist.

6. Tragarmsystem (1) nach einem der Ansprüche 1 bis 5, wobei die Befestigungsbaugruppe (15) eine Kulissenscheibe (2) umfasst.

7. Tragarmsystem (1) nach einem der Ansprüche 1 bis 6, wobei das elastische Element (11) eine Feder ist.

8. Tragarmsystem (1) nach einem der Ansprüche 1 bis 7, wobei die Befestigungsbaugruppe (15) eingerichtet ist, das elastische Element (11) so zu verschieben, dass ein Winkel zwischen dem elastischen Element (11) und dem Ausleger (14) größer ist, wenn der Ausleger (14) waagerecht ist.

9. Tragarmsystem (1) nach einem der Ansprüche 1 bis 8, wobei die Befestigungsbaugruppe (15) eingerichtet ist, das elastische Element (11) so zu verschieben, dass eine Hooksche Kraft des elastischen Elements (11) verändert wird.

10. Tragarmsystem (1) nach einem der Ansprüche 1 bis 9, wobei der Ausleger (14) ein starres Objekt ist.

11. Tragarmsystem (1) nach einem der Ansprüche 1 bis 10, wobei der Ausleger (14) einteilig ist.

12. Verfahren zum Herstellen des Tragarmsystem (1) nach einem der Ansprüche 1 bis 11, wobei Teile des Tragarmsystems (1) nur durch Biegen und Verschrauben miteinander verbunden werden.

## Claims

1. A support arm system (1) adapted to hold an object, the support arm system (1) comprising:
a fastening anchor (9),
a cantilever (14) connected to the fastening anchor (9);
an elastic element (11) connected to the cantilever (14); and
a fastening assembly (15) comprising a first component (8) and a second component (2), wherein the first component (8) of the fastening assembly (15) is fixedly connected to the fastening anchor (9), wherein the second component (2) of the fastening assembly (15) is fixedly connected to one end of the elastic element (11);
wherein the first component (8) and the second component (2) are movably connected in a direction of movement relative to each other, wherein the direction of movement is other than a direction from the end of the elastic element (11) to a point where the elastic element is connected to the cantilever (14), and **characterized in that** the fastening assembly (15) is adapted such that movement of the first component (8) relative to the second component (2) in the movement direction changes an angle between cantilever (14) and elastic element (11);
wherein the fastening assembly (15) comprises an elongated hole (10).

2. The support arm system (1) according to claim 1, wherein the second component (2) comprises the elongated hole (10), and wherein the support arm system (1) further comprises a guide (12) with a pivot bolt (4), wherein the guide (12) is adapted to guide the first component with the pivot bolt (4) about an axis of rotation of the guide (12) along the elongated hole (10) movably relative to the second component (2).

3. The support arm system (1) according to claim 2, wherein the elastic element (11) is adapted to act on the guide (12).

4. The support arm system (1) according to any one of claims 1 to 3, wherein the elongated hole (10) extends at an angle of at least 45° relative to a force-acting direction of the elastic element (11).

5. The support arm system (1) according to any one of claims 1 to 4, wherein the fastening assembly (15) is connected only by the cantilever (14) and/or the elastic element (11) to the point where the elastic element (11) is connected to the cantilever (14).

6. The support arm system (1) according to any one of claims 1 to 5, wherein the fastening assembly (15) comprises a baffle plate (2).

7. The support arm system (1) according to any one of claims 1 to 6, wherein the elastic element (11) is a spring.

8. The support arm system (1) according to any one of claims 1 to 7, wherein the fastening assembly (15) is adapted to move the elastic element (11) such that an angle between the elastic element (11) and the cantilever (14) is greater when the cantilever (14) is horizontal.

9. The support arm system (1) according to any one of claims 1 to 8, wherein the fastening assembly (15) is adapted to move the elastic element (11) such that a Hook force of the elastic element (11) is changed.

10. The support arm system (1) according to any one of claims 1 to 9, wherein the cantilever (14) is a rigid object.

11. The support arm system (1) according to any one of claims 1 to 10, wherein the cantilever (14) is in one piece.

12. A method for manufacturing the support arm system (1) according to any one of claims 1 to 11, wherein parts of the support arm system (1) are connected to each other only by bending and screwing.

## Revendications

1. Système de bras de support (1), conçu pour maintenir un objet, le système de bras de support (1) comprenant :
un ancrage de fixation (9),
un bras (14) relié à l'ancrage de fixation (9) ;
un élément élastique (11) relié au bras (14) ; et
un ensemble de fixation (15) qui comprend un premier composant (8) et un second composant (2), dans lequel le premier composant (8) de l'ensemble de fixation (15) est relié de manière fixe à l'ancrage de fixation (9), dans lequel le second composant (2) de l'ensemble de fixation (15) est relié de manière fixe à une extrémité de l'élément élastique (11) ;
dans lequel le premier composant (8) et le second composant (2) sont reliés de manière à pouvoir se déplacer l'un par rapport à l'autre dans une direction de déplacement, dans lequel la direction de déplacement est différente d'une direction allant de l'extrémité de l'élément élastique (11) vers un point où l'élément élastique est relié au bras (14), et **caractérisé en ce que** l'ensemble de fixation (15) est conçu de sorte qu'un déplacement du premier composant (8) par rapport au second composant (2) dans la direction de déplacement modifie un angle entre le bras (14) et l'élément élastique (11) ;
dans lequel l'ensemble de fixation (15) comprend un trou oblong (10).

2. Système de bras de support (1) selon la revendication 1, dans lequel le second composant (2) comprend le trou oblong (10), et dans lequel le système de bras de support (1) comprend en outre un bras de guidage (12) comportant un axe de pivotement (4), dans lequel le bras de guidage (12) est conçu pour guider, avec l'axe de pivotement (4), le premier composant de manière à pouvoir le déplacer vers le second composant (2) autour d'un axe de rotation du bras de guidage (12) le long du trou oblong (10).

3. Système de bras de support (1) selon la revendication 2, dans lequel l'élément élastique (11) est conçu pour agir sur le bras de guidage (12).

4. Système de bras de support (1) selon l'une des revendications 1 à 3, dans lequel le trou oblong (10) s'étend selon un angle d'au moins 45° par rapport à une direction d'action de force de l'élément élastique (11).

5. Système de bras de support (1) selon l'une des revendications 1 à 4, dans lequel l'ensemble de fixation (15) est relié au point où l'élément élastique (11) est relié au bras (14) uniquement par le bras (14) et/ou l'élément élastique (11).

6. Système de bras de support (1) selon l'une des revendications 1 à 5, dans lequel l'ensemble de fixation (15) comprend une plaque de coulissement (2).

7. Système de bras de support (1) selon l'une des revendications 1 à 6, dans lequel l'élément élastique (11) est un ressort.

8. Système de bras de support (1) selon l'une des revendications 1 à 7, dans lequel l'ensemble de fixation (15) est conçu pour déplacer l'élément élastique (11) de sorte qu'un angle entre l'élément élastique (11) et le bras (14) est plus grand lorsque le bras (14) est à l'horizontale.

9. Système de bras de support (1) selon l'une des revendications 1 à 8, dans lequel l'ensemble de fixation (15) est conçu pour déplacer l'élément élastique (11) de sorte qu'une force de Hooke de l'élément élastique (11) est modifiée.

10. Système de bras de support (1) selon l'une des revendications 1 à 9, dans lequel le bras (14) est un objet rigide.

11. Système de bras de support (1) selon l'une des revendications 1 à 10, dans lequel le bras (14) est monobloc.

12. Procédé pour la fabrication du système de bras de support (1) selon l'une des revendications 1 à 11, dans lequel des pièces du système de bras de support (1) sont reliées entre elles uniquement par cintrage et vissage.
